# EUROPÄISCHE PATENTSCHRIFT

(11) **EP 3 956 249 B1**
(45) Veröffentlichungstag und Bekanntmachung des Hinweises auf die Patenterteilung: **08.05.2024**
(21) Anmeldenummer: 20714495.7
(22) Anmeldetag: 17.03.2020
(51) Int. Cl.: B60L 5/38, B60L 13/03, B65G 43/00, B65G 54/02

(54) **VORRICHTUNG ZUM TRANSPORTIEREN VON GEGENSTÄNDEN**
APPARATUS FOR TRANSPORTING OBJECTS
DISPOSITIF DE TRANSPORT D'OBJETS

(30) Priorität: 16.04.2019 DE 102019110056
(43) Veröffentlichungstag der Anmeldung: 23.02.2022
(73) Patentinhaber: KRONES AG, 93073 Neutraubling (DE)
(72) Erfinder: WEISS, Markus, 93073 Neutraubling (DE)
(74) Vertreter: v. Bezold & Partner Patentanwälte - PartG mbB
(86) Internationale Anmeldenummer: PCT/EP2020/057293
(87) Internationale Veröffentlichungsnummer: WO 2020/212053

(56) Entgegenhaltungen:
- EP-A1- 3 597 549
- AT-B1- 515 096
- DE-A1-102010 030 998
- DE-A1-102012 009 367
- DE-A1-102015 206 172
- DE-U1-202012 007 288

## Beschreibung

### Technisches Gebiet

Die Erfindung betrifft eine Vorrichtung zum Transportieren von Gegenständen, vorzugsweise von Behältern, mit einer Führungsbahn und mindestens einer Bewegungsvorrichtung.

### Technischer Hintergrund

Ein aktueller Entwicklungstrend beim Transport von Gegenständen jeglicher Art in Logistikzentren aber auch in Druckereien, vorzugsweise jedoch von Behältern, wie beispielsweise Flaschen oder Dosen, in Anlagen und Maschinen für die Herstellung, Abfüllung und Verpackung von Getränken und flüssigen Nahrungsmitteln ist die Langstator-Linearmotortechnik. Herkömmliche Systeme sind in der Lage, Bewegungsvorrichtungen (sogenannte "mover"), die die Behälter tragen, entlang von Führungsbahnen zu bewegen.

Die DE 10 2014 104 375 A1 offenbart ein Kontrollsystem, das einen Linearmotor als Antrieb für Schlitten verwendet. Der Linearmotor kann einen Magnetantrieb umfassen. Eine Datenübertragung von und zu dem Schlitten erfolgt dabei kabellos über WLAN oder kabellos über Koppelelemente in einer drahtlosen Stromversorgung. Die Energieversorgung der Aktuatoren auf dem Schlitten erfolgt ebenfalls drahtlos.

Die AT 515 096 B1 offenbart ein Transportsystem umfassend ein Schienennetz, welches eine Mehrzahl von autonomen Steuerabschnitten und den Steuerabschnitten jeweils zugeordnete elektrische Steuereinheiten aufweist, und eine Mehrzahl von Kleintransportbehältern, die auf dem Schienennetz geführt sind. Ein Kleintransportbehälter weist Mittel auf, um innerhalb eines Steuerabschnittes mit der dem jeweiligen Steuerabschnitt zugeordneten elektrischen Steuereinheit zu kommunizieren. Die Steuereinheit ist ausgebildet, um analoge Statussignale von dem Kleintransportbehälter zu empfangen und analoge Steuersignale an den Kleintransportbehälter zu senden.

Zum weiteren Stand der Technik wird auf die, den Oberbegriff des Anspruchs 1 offenbarende DE 20 2012 007288 U1, die DE 10 2010 030998 A1, die DE 10 2015 206172 A1, die EP 3 597 549 A1 und die DE 10 2012 009367 A1 verwiesen.

Der Erfindung liegt die Aufgabe zu Grunde, eine alternative und/oder verbesserte Vorrichtung zum Transportieren von Behältern zu schaffen.

### Zusammenfassung der Erfindung

Die Aufgabe wird gelöst durch die Merkmale des unabhängigen Anspruchs 1. Vorteilhafte Weiterbildungen sind in den abhängigen Ansprüchen und der Beschreibung angegeben.

Die Erfindung schafft eine Vorrichtung zum Transportieren von Gegenständen, vorzugsweise von Behältern in einer Behälterbehandlungsanlage (z. B. zum Herstellen, Reinigen, Prüfen, Abfüllen, Verschließen, Etikettieren, Bedrucken und/oder Verpacken von Behältern für flüssige Medien, vorzugsweise Getränke oder flüssige Nahrungsmittel). Die Vorrichtung weist eine Führungsbahn (z. B. Führungsschiene, Führungsnut usw.) mit einer Signalleitung, vorzugsweise einer Datenbusleitung (z. B. CAN-Bus-Leitung, ISOBUS-Leitung, Profibus-Leitung,

Ethernet-Leitung usw.) auf. Die Vorrichtung weist mindestens eine Bewegungsvorrichtung, vorzugsweise mehrere Bewegungsvorrichtungen, auf. Die mindestens eine Bewegungsvorrichtung ist entlang der Führungsbahn führbar. Die mindestens eine Bewegungsvorrichtung weist eine Halterung (z. B. Klemmvorrichtung oder Saugvorrichtung), vorzugsweise eine Behälterhals-Halterung oder eine Behältermantel-Halterung, zum Halten eines (z. B. einzigen) Gegenstands, vorzugsweise eines Behälters (z. B. einer Flasche, Dose und/oder eines anderen Behälters), auf. Die mindestens eine Bewegungsvorrichtung weist eine Kommunikationsschnittstelle, mittels der die Signalleitung zur Signalübertragung berührbar (physisch kontaktierbar) ist, auf.

Die Vorrichtung kann durch physischen Kontakt (direkten Körperkontakt bzw. direktes Berühren) zwischen der Kommunikationsschnittstelle und der Signalleitung den Vorteil einer sicheren und störungsfreien Kommunikation mit Sensoren und Aktoren der Bewegungsvorrichtung aufweisen. Da die Signalleitung in der Führungsbahn umfasst ist, kann die Kommunikation entlang der gesamten Führungsbahn aufrechterhalten werden. Die Kommunikation kann beispielsweise dazu genutzt werden, Sensordaten von der Bewegungsvorrichtung an die Signalleitung zu übertragen und/oder Anweisungssignale über die Signalleitung an Aktoren der Bewegungsvorrichtung zu übersenden.

Zweckmäßig kann sich die Signalleitung entlang einer Länge der Führungsbahn erstrecken, z. B. entlang einer gesamten Länge der Führungsbahn oder entlang eines Abschnitts der Führungsbahn.

In einem Ausführungsbeispiel ist die Kommunikationsschnittstelle als ein zweckmäßig drehbarer Schleifringübertrager oder ein Schleifschuhübertrager ausgebildet. Damit kann die Kommunikationsschnittstelle auf einfache Weise implementiert werden.

Erfindungsgemäß weist die mindestens eine Bewegungsvorrichtung ein Führungselement auf, das vorzugsweise als ein Gleitschuh oder eine drehbare Rolle ausgebildet ist, zur Führung der mindestens einen Bewegungsvorrichtung entlang der Führungsbahn. Die Kommunikationsschnittstelle ist erfindungsgemäss in das Führungselement integriert. Besonders bevorzugt sind das Führungselement und die Kommunikationsschnittstelle gemeinsam als eine drehbare Schleifringübertrager-Rolle ausgebildet. Diese Ausführung kann den Vorteil einer beispielsweise bauraumgünstigen, gewichtssparenden und/oder kostengünstigen Funktionsintegration von Führung und Kommunikation in einem Bauteil bieten.

In einem weiteren Ausführungsbeispiel weist die Vorrichtung ferner eine weitere Führungsbahn (z. B. Führungsschiene, Führungsnut usw.) mit einer weiteren Signalleitung, vorzugsweise einer Datenbusleitung, auf. Zweckmäßig kann die mindestens eine Bewegungsvorrichtung ein weiteres Führungselement zur Führung der mindestens einen Bewegungsvorrichtung entlang der weiteren Führungsbahn und/oder eine weitere Kommunikationsschnittstelle aufweisen. Vorzugsweise kann die Kommunikationsschnittstelle als ein Schleifringübertrager oder ein Schleifschuhübertrager ausgebildet sein und/oder in das weitere Führungselement integriert sein. Zweckmäßig kann mittels der weiteren Kommunikationsschnittstelle die weitere Signalleitung zur Signalübertragung berührbar (physisch kontaktierbar) sein. Die weitere Kommunikationsschnittstelle in Kommunikation mit der weiteren Signalleitung kann zweckmäßig aus zwei Gründen vorteilhaft sein, die auch miteinander kombinierbar sind. Erstens kann somit beispielsweise eine besonders sichere und störungsunanfällige redundante Kommunikation ermöglicht werden, wenn beide Kommunikationsschnittstellen in Kommunikation mit ihrer jeweiligen Signalleitung sind. Zweitens kann eine Kommunikation mit der Bewegungsvorrichtung aufrechterhalten werden, wenn die Bewegungsvorrichtung beispielsweise in einem Weichenabschnitt einen Führungsbahnwechsel von der Führungsbahn zu der weiteren Führungsbahn vollführt.

In einer Weiterbildung sind die Führungsbahn und die weitere Führungsbahn, das Führungselement und das weitere Führungselement, und/oder die Kommunikationsschnittstelle und die weitere Kommunikationsschnittstelle so relativ zueinander angeordnet, dass entweder das Führungselement die mindestens eine Bewegungsvorrichtung entlang der Führungsbahn führt, wobei die Kommunikationsschnittstelle die Signalleitung der Führungsbahn zur Signalübertragung berührt, oder das weitere Führungselement die mindestens eine Bewegungsvorrichtung entlang der weiteren Führungsbahn führt, wobei die weitere Kommunikationsschnittstelle die weitere Signalleitung der weiteren Führungsbahn zur Signalübertragung berührt. Damit kann sichergestellt werden, dass die Kommunikation auch bei Führungsbahnwechseln zwischen der Führungsbahn und der weiteren Führungsbahn aufrechterhalten werden kann.

Zweckmäßig können die Führungsbahn und die weitere Führungsbahn auf entgegengesetzten Seiten der mindestens einen Bewegungsvorrichtung angeordnet sein (z. B. auf gleicher Höhe), und/oder die mindestens eine Bewegungsvorrichtung kann zwischen der Führungsbahn und der weiteren Führungsbahn positioniert sein. Beispielsweise kann die Führungsbahn linksseitig von der mindestens einen Bewegungsvorrichtung angeordnet sein, und die weitere Führungsbahn kann rechtsseitig von der mindestens einen Bewegungsvorrichtung angeordnet sein.

In einer Ausführungsform ist die Kommunikationsschnittstelle (nur) zur unidirektionalen Kommunikation ausgeführt, vorzugsweise zum Empfangen von Signalen von der Signalleitung oder zum Senden von Signalen zu der Signalleitung. Alternativ kann die Kommunikationsschnittstelle beispielsweise zur bidirektionalen Kommunikation ausgeführt sein, zum Empfangen von Signalen von der Signalleitung und zum Senden von Signalen zu der Signalleitung.

In einer weiteren Ausführungsform weist die Führungsbahn ferner eine Energieversorgungsleitung zur Übertragung von elektrischer Energie auf. Zweckmäßig kann die mindestens eine Bewegungsvorrichtung einen Leistungsabnehmer in, vorzugsweise physischem, Kontakt mit der Energieversorgungsleitung aufweisen. Mittels der durch den Leistungsabnehmer aufgenommenen elektrischen Energie können beispielsweise ein Aktor, ein Sensor, ein Elektromagnet und/oder ein Energiespeicher der mindestens einen Bewegungsvorrichtung mit elektrischer Energie versorgt werden.

In einer Weiterbildung sind die Energieversorgungsleitung und die Signalleitung miteinander integriert (z. B. Power over Ethernet, PowerLan, Manchester Bus Powered usw.) oder separat zueinander angeordnet. Alternativ oder zusätzlich können der Leistungsabnehmer und die Kommunikationsschnittstelle miteinander integriert oder separat zueinander angeordnet sein. Damit kann auf vorteilhafte Weise eine beispielsweise bauraumgünstige, gewichtssparende und/oder kostengünstige Funktionsintegration von Energieversorgung und Kommunikation ermöglicht werden.

In einer weiteren Ausführungsform weist die Vorrichtung ein Langstatorsegment zum Antreiben der mindestens einen Bewegungsvorrichtung auf. Vorzugsweise kann ein Antrieb (z. B. Vortrieb) der mindestens einen Bewegungsvorrichtung durch magnetische Wechselwirkungen zwischen mindestens einem Elektromagneten und/oder Permanentmagneten des Langstatorsegments, der zweckmäßig entlang der Führungsbahn verläuft, und mindestens einem Elektromagneten und/oder Permanentmagneten der mindestens einen Bewegungsvorrichtung bewirkt werden. Die Vorrichtung wie hierin offenbart kann somit besonders bevorzugt bei Langstator-Linearmotoren eingesetzt werden.

In einer Ausführungsvariante weist die mindestens eine Bewegungsvorrichtung eine Steuereinheit in Kommunikationsverbindung mit der Kommunikationsschnittstelle auf. Zweckmäßig kann die Steuereinheit zum Steuern von mindestens einem Aktor und/oder Elektromagneten der mindestens einen Bewegungsvorrichtung ausgebildet sein, zweckmäßig in Abhängigkeit von über die Kommunikationsschnittstelle von der Signalleitung empfangenen Signalen. Alternativ oder zusätzlich kann die Steuereinheit zum Auslesen von Sensordaten von mindestens einem Sensor der mindestens einen Bewegungsvorrichtung ausgebildet sein, zweckmäßig zum Senden der Sensordaten über die Kommunikationsschnittstelle zu der Signalleitung.

In einer Weiterbildung ist die Steuereinheit dazu ausgebildet, ein mittels der Kommunikationsschnittstelle von der Signalleitung empfangenes Signal in Abhängigkeit von einem Vergleich einer Kennung des empfangenen Signals mit einer voreingestellten Kennung (z. B. der Steuereinheit oder der mindestens einen Bewegungsvorrichtung) weiterzuverarbeiten (z. B. zur Steuerung eines Aktors und/oder eines Elektromagnets). Alternativ oder zusätzlich kann die Steuereinheit dazu ausgebildet sein, ein mittels der Kommunikationsschnittstelle zu der Signalleitung zu sendendes Signal mit einer voreingestellten Kennung, mittels der vorzugsweise ein Ursprung des Signals und/oder die mindestens eine Bewegungsvorrichtung eindeutig identifizierbar ist, zu ergänzen. Dadurch kann insbesondere bei der Verwendung mehrerer Bewegungsvorrichtungen sichergestellt werden, dass die Kommunikation zielgerichtet ablaufen kann.

In einer weiteren Ausführungsvariante weist die mindestens eine Bewegungsvorrichtung mindestens einen Sensor, vorzugsweise eine Wiegeeinrichtung, einen Positionssensor und/oder einen Zustandssensor, in Kommunikationsverbindung mit der Kommunikationsschnittstelle zum Senden von Sensorsignalen zu der Signalleitung auf. Vorzugsweise kann der mindestens eine Sensor dazu ausgebildet sein, das Sensorsignal mit einer voreingestellten Kennung zu ergänzen. Alternativ kann beispielsweise die Steuereinheit dazu ausgebildet sein, ein von dem mindestens einen Sensor gesendetes Signal mit einer voreingestellten Kennung zu ergänzen. Vorzugsweise kann der mindestens eine Sensor und/oder die mindestens eine Bewegungsvorrichtung mittels der voreingestellte Kennung eindeutig identifizierbar sein.

In einer weiteren Ausführungsvariante weist die mindestens eine Bewegungsvorrichtung mindestens einen Aktor, vorzugsweise ein Ventil und/oder die (zum Beispiel elektrische oder pneumatische) Halterung, besonders bevorzugt eine Behälter-Klemmvorrichtung, einen Behälter-Greifer und/oder einen Behälter-Haltesauger, in Kommunikationsverbindung mit der Kommunikationsschnittstelle zum Empfangen von Anweisungssignalen von der Signalleitung auf. Damit kann der Aktor beispielsweise von einer Zentralsteuereinheit über die Signalleitung zentral gesteuert werden.

In einem Ausführungsbeispiel sind mehrere Bewegungsvorrichtungen umfasst, deren jeweilige Steuereinheit dazu ausgebildet ist, mit den Steuereinheiten der anderen Bewegungsvorrichtungen mittels der jeweiligen Kommunikationsschnittstelle und der Signalleitung zu kommunizieren. Alternativ oder zusätzlich kann die Vorrichtung ferner eine Zentralsteuereinheit aufweisen, die mittels der Signalleitung und der Kommunikationsschnittstelle in Kommunikationsverbindung mit der Steuereinheit ist. Je nach Anforderung kann somit beispielsweise eine zentrale Steuerung der Bewegungsvorrichtungen mittels der Zentralsteuereinheit und/oder eine Kommunikation der Bewegungsvorrichtungen untereinander ermöglicht werden.

Vorzugsweise kann sich der hierin verwendete Begriff "Steuereinheit" oder "Zentralsteuereinheit" auf eine Elektronik beziehen, die je nach Ausbildung Steuerungsaufgaben und/oder Regelungsaufgaben übernehmen kann. Auch wenn hierin der Begriff "Steuern" verwendet wird, kann damit gleichsam zweckmäßig auch "Regeln" bzw. "Steuern mit Rückkopplung" umfasst sein.

Weiter kann die Erfindung genutzt werden, um Daten auf der Bewegungsvorrichtung zu speichern, um diese z.B. für eine Produktverfolgung (Track and Trace) zu verwenden. Die Daten können an jeder beliebigen Stelle im Transportsystem ein- bzw. ausgelesen werden. Ebenso können die auf der Bewegungsvorrichtung gespeicherten Daten verwendet werden, um im Transportsystem Aktionen zu aktivieren (z.B. aktivieren einer Druckstation).

Die Erfindung betrifft auch eine Vorrichtung zum Behandeln von Behältern. Die Vorrichtung weist eine Behälter-Behandlungsvorrichtung, vorzugsweise eine Herstellvorrichtung zum Herstellen von Behältern, eine Reinigungsvorrichtung zum Reinigen von Behältern, eine Prüfvorrichtung zum Prüfen von Behältern, eine Füllvorrichtung zum Befüllen von Behältern, eine Verschlussvorrichtung zum Verschließen von Behältern, eine Etikettiervorrichtung zum Etikettieren von Behältern, eine Druckvorrichtung zum Bedrucken von Behältern und/oder eine Verpackungsvorrichtung zum Verpacken von Behältern, auf. Die Vorrichtung weist ferner die Vorrichtung zum Transportieren von Behältern wie hierin offenbart auf, wobei die Vorrichtung in die Behälter-Behandlungsvorrichtung integriert ist oder zum Transportieren von Behältern zu oder weg von der Behälter-Behandlungsvorrichtung angeordnet ist.

Ferner kann die Erfindung auch in anderen Anwendungsbereichen wie in Druckereien zum Transport von Büchern oder als Transportmittel im Logistikumfeld angewandt werden. Grundsätzlich ist die Erfindung in vielen Einsatzbereichen denkbar, bei denen ein Individualtransport von Gegenständen jeglicher Art mit einem elektromagnetischen Langstator-Linearmotor verlangt wird.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine schematische Darstellung einer Vorrichtung zum Transportieren von Behältern gemäß einem Ausführungsbeispiel der vorliegenden Offenbarung, in einer Seitenansicht entlang der Förderrichtung; und
- Figur 2: eine schematische Darstellung der beispielhaften Vorrichtung zum Transportieren von Behältern im einem Weichenabschnitt in einer Querschnittansicht quer zu der Förderrichtung.

Die in den Figuren gezeigten Ausführungsformen stimmen zumindest teilweise überein, sodass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

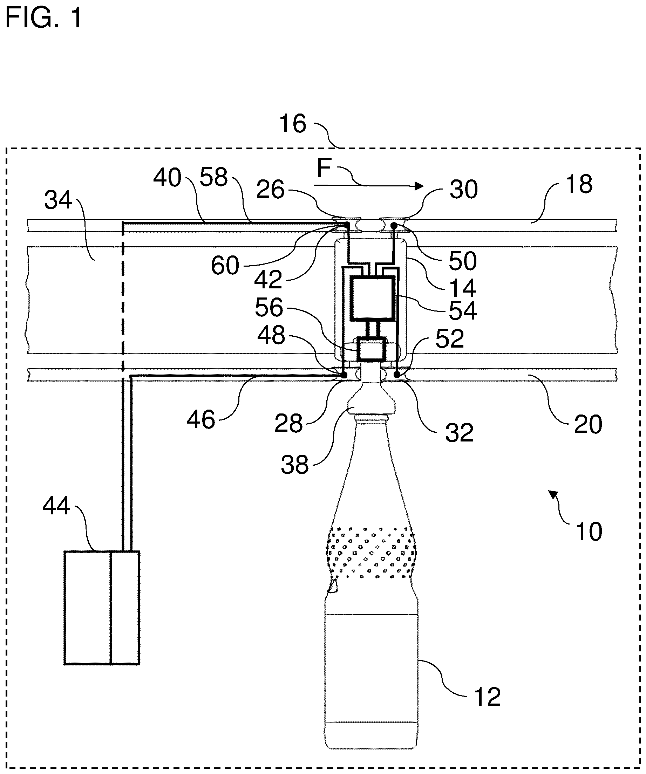

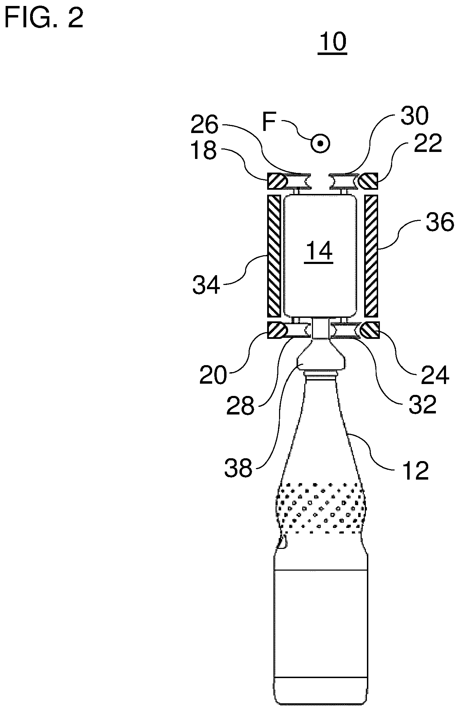

Die Figuren 1 und 2 zeigen eine Vorrichtung 10 zum Transportieren von Behältern (z. B. Flaschen, Dosen und/oder anderen Behältern) 12 mittels mindestens einer Bewegungsvorrichtung 14. Aus Übersichtsgründen sind in Figur 1 und Figur 2 jeweils nur ein Behälter 12 und nur eine Bewegungsvorrichtung 14 dargestellt.

Die Vorrichtung 10 kann die mindestens eine Bewegungsvorrichtung 14 mittels Langstator-Linearmotortechnik antreiben. Auch wenn der Antrieb mittels Langstator-Linearmotortechnik besonders bevorzugt ist, wurde erkannt, dass die hierin offenbarten Techniken auch bei anderen Antriebskonzepten eingesetzt werden können. Es ist somit auch möglich, dass die mindestens eine Bewegungsvorrichtung 14 mittels einer anderen Antriebstechnik angetrieben wird. Zum Beispiel kann jede Bewegungsvorrichtung eine eigene elektrische Antriebseinheit aufweisen, mit der beispielsweise Räder oder Rollen der Bewegungsvorrichtung antreibbar sind.

Die Vorrichtung 10 kann eigens für den Transport von Behältern 12 ausgeführt sein. Zum Beispiel kann die Vorrichtung 10 bezüglich eines Behälterstroms der Behälter 12 stromaufwärts oder stromabwärts einer Behälter-Behandlungsvorrichtung zum Herstellen, Reinigen, Prüfen, Füllen, Verschließen, Etikettieren, Bedrucken, Verpacken usw. angeordnet sein. Die Vorrichtung 10 kann beispielsweise in einem Förderer zum Transport von Behältern entlang einer Gerade oder einer Bahnkurve umfasst sein.

Es ist allerdings auch möglich, dass die Vorrichtung 10 zum Transportieren der Behälter 12 selbst in einer Behälter-Behandlungsvorrichtung 16 (schematisch in Figur 1 angedeutet) umfasst ist. Die Behälter-Behandlungsvorrichtung 16 ist sowohl zur Behandlung der Behälter 12 als auch zum Transportieren der Behälter 12 vor, während und/oder nach der Behandlung ausgebildet. Beispielsweise kann die Behälter-Behandlungsvorrichtung 16 eine Füllvorrichtung (z. B. ein Füllerkarussell) zum Befüllen der Behälter 12, eine Prüfvorrichtung zum Prüfen der Behälter 12, eine Etikettiervorrichtung zum Etikettieren der Behälter 12, eine Druckvorrichtung zum Bedrucken der Behälter 12 und/oder eine Verpackungsvorrichtung zum Verpacken der Behälter 12 sein.

Die Figur 1 zeigt ein Ausführungsbeispiel, bei dem die Vorrichtung 10 zwei Führungsbahnen 18 und 20 aufweist. Die Figur 2 zeigt die Vorrichtung 10 in einem Weichenabschnitt zum Schienenwechsel (Führungsbahnwechsel), in dem die Vorrichtung 10 zwei weitere Führungsbahnen 22 und 24 (siehe Figur 2) aufweist. Im Weichenabschnitt kann ein Führungsbahnwechsel der Bewegungsvorrichtung 14 zwischen einerseits der ersten und zweiten Führungsbahn 18, 20 und andererseits der dritten und vierten Führungsbahn 22, 24 stattfinden, wenn gewünscht. Außerhalb eines solchen Weichenabschnitts kann die Vorrichtung 10 beispielsweise entweder nur die erste und zweite Führungsbahn 18, 20 oder nur die dritte und vierte Führungsbahn 22, 24 aufweisen. Es ist allerdings auch möglich, dass die Vorrichtung 10 mehr oder weniger Führungsbahnen aufweist. Die Führungsbahnen 18, 20, 22, 24 können bspw. als Führungsschienen (wie dargestellt ist) oder als Führungsnuten ausgeführt sein.

Die Figur 1 zeigt die Vorrichtung 10 in einer Seitenansicht entlang einer Förderrichtung F (siehe Pfeil in Figur 1). Die Figur 2 zeigt die Vorrichtung 10 in einer Querschnittansicht quer zur Förderrichtung F (siehe Pfeil in Figur 2) in einem Weichenabschnitt zum Führungsbahnwechsel der Bewegungsvorrichtung 14.

Die erste Führungsbahn 18 ist parallel zur zweiten Führungsbahn 20 oberhalb der zweiten Führungsbahn 20 angeordnet. Die dritte Führungsbahn 22 ist parallel zur vierten Führungsbahn 24 oberhalb der vierten Führungsbahn 24 angeordnet (siehe Figur 2). Die erste und zweite Führungsbahn 18, 20 einerseits und die dritte und vierte Führungsbahn 22, 24 andererseits sind auf entgegengesetzten Seiten der Bewegungsvorrichtung 14 angeordnet. Im Weichenabschnitt können die Führungsbahnen 18, 20, 22, 24 parallel verlaufen, je nach Konfiguration des Weichenabschnitts. Die Bewegungsvorrichtung 14 ist zwischen der ersten und zweiten Führungsbahn 18, 20 einerseits und der dritten und vierten Führungsbahn 22, 24 andererseits positioniert.

Zwischen der ersten und zweiten Führungsbahn 18, 20 ist ein erstes Langstatorsegment 34 angeordnet. Zwischen der dritten und vierten Führungsbahn 22, 24 ist ein zweites Langstatorsegment 36 angeordnet. Das erste Langstatorsegment 34 erstreckt sich entlang eines Verlaufs der ersten und zweiten Führungsbahn 18, 20. Das zweite Langstatorsegment 36 erstreckt sich entlang eines Verlaufs der dritten und vierten Führungsbahn 22, 24. Die Langstatorsegmente 34, 36 können in magnetische Wechselwirkung mit Elektromagneten und/oder Permanentmagneten (nicht gesondert dargestellt) der Bewegungsvorrichtung 14 zum Fortbewegen der Bewegungsvorrichtung 14 treten. Das erste Langstatorsegment 34 und die Magnete der Bewegungsvorrichtung 14 sowie das zweite Langstatorsegment 36 und die Magnete der Bewegungsvorrichtung 14 bilden somit jeweils einen sogenannten Langstator-Linearmotor.

Die Bewegungsvorrichtung 14 weist vier Führungselemente 26, 28, 30, 32 auf. Das erste Führungselement 26 kann die Bewegungsvorrichtung 14 entlang der ersten Führungsbahn 18 führen, das zweite Führungselement 28 kann die Bewegungsvorrichtung 14 entlang der zweiten Führungsbahn 20 führen, usw. Im dargestellten Ausführungsbeispiel sind die Führungselemente 26, 28, 30, 32 als drehbare Rollen ausgebildet, die auf den jeweiligen Führungsbahnen 18, 20, 22, 24 abrollen können. Es ist allerdings auch möglich, dass die Führungselemente 26, 28, 30, 32 anders ausgeführt sind, zum Beispiel als Gleitschuhe bzw. Gleitkufen. Je nach Anzahl der Führungsbahnen und abhängig von einer Konfiguration der Führungselemente kann die Bewegungsvorrichtung 14 auch mehr oder weniger Führungselemente aufweisen.

Die Figur 2 zeigt einen Weichenabschnitt der Vorrichtung 10, in dem die Bewegungsvorrichtung 14 einen Führungsbahnwechsel von der ersten und zweiten Führungsbahn 18, 20 zu der dritten und vierten Führungsbahn 22, 24 durchführen kann (oder umgekehrt), wenn gewünscht. Hierzu kann beispielsweise ein durch das zweite Langstatorsegment 36 bewirktes Magnetfeld, das die Bewegungsvorrichtung 14 fortbewegt und anzieht, verstärkt werden. Gleichzeitig kann ein durch das erste Langstatorsegment 34 bewirktes Magnetfeld, das die Bewegungsvorrichtung 14 fortbewegt und anzieht, abgeschwächt werden. Die Bewegungsvorrichtung 14 kann so von den Führungsbahnen 18, 20 zu den Führungsbahnen 22, 24 wechseln. Der Luftspalt zwischen dem ersten Langstatorsegment 34 und der Bewegungsvorrichtung 14 vergrößert sich. Die Führungselemente 26, 28 gelangen außer Eingriff von den Führungsbahnen 18, 20. Der Luftspalt zwischen dem zweiten Langstatorsegment 36 und der Bewegungsvorrichtung 14 verkleinert sich. Die Führungselemente 30, 32 gelangen in Eingriff mit den Führungsbahnen 22, 24. Wie bereits angemerkt, kann die Vorrichtung 10 außerhalb des in Figur 2 dargestellten Weichenabschnitts beispielsweise nur die Führungsbahnen 18, 20 oder nur die Führungsbahnen 22, 24 als Führungsbahnen für die Bewegungsvorrichtung 14 aufweisen.

Die Bewegungsvorrichtung 14 weist eine Halterung 38 zum Halten des Behälters 12 auf. Die Halterung 38 ist als eine Behälterhals-Halterung zum Halten des Behälters 12 an dessen Behälterhals ausgeführt. Beispielsweise kann der Behälterhals in der Halterung 38 mittels einer Klemmhalterung geklemmt sein. Es ist allerdings auch möglich, dass die die Halterung 38 anders ausgeführt ist, zum Beispiel als eine Greifer-Halterung oder eine Saug-Halterung. Die Halterung kann beispielsweise am Behälterhals ("neck-handling") oder am Behälteraußenmantel ("base-handling") angreifen.

Die erste Führungsbahn 18 weist eine erste Signalleitung 40 auf. Die erste Signalleitung 40 erstreckt sich entlang einer Länge der ersten Führungsbahn 18. Die erste Signalleitung 40 kann außenseitig an der ersten Führungsbahn 18 angeordnet und dem ersten Führungselement 26 zugewandt sein. Die erste Signalleitung 40 kann beispielsweise als eine Datenbusleitung ausgebildet sein, zum Beispiel als CAN-Bus-Leitung, ISOBUS-Leitung, Profibus-Leitung, Ethernet-Leitung usw.

Die Bewegungsvorrichtung 14 weist eine erste Kommunikationsschnittstelle 42 auf. Die Bewegungsvorrichtung 14 kann mittels der ersten Kommunikationsschnittstelle 42 mit der ersten Signalleitung 40 und allen daran angeschlossenen Geräten, zum Beispiel einer Zentralsteuereinheit 44 (z. B. einer speicherprogrammierbaren Steuerung - SPS) oder weiteren Bewegungsvorrichtungen, kommunizieren. Je nach Anforderung kann die Kommunikation unidirektional (Senden oder Empfangen von Signalen) oder bidirektional (Senden und Empfangen von Signalen) sein. Die erste Kommunikationsschnittstelle 42 kann die erste Signalleitung 40 berühren, wenn die Bewegungsvorrichtung 14 entlang der ersten und zweiten Führungsbahn 18, 20 geführt wird. Die Kommunikationsschnittstelle 42 kann beispielsweise als ein Schleifringübertrager oder ein Gleitschuhübertrager ausgebildet sein.

Die erste Kommunikationsschnittstelle 42 ist in das erste Führungselement 26 integriert, wie in Figur 1 schematisch dargestellt ist. In anderen Worten, das beispielsweise als Rolle ausgebildete Führungselement 26 dient gleichzeitig in Form eines Schleifringübertragers als die erste Kommunikationsschnittstelle 42. Wenn das erste Führungselement 26 beispielsweise alternativ als ein Gleitschuh ausgebildet ist, kann die erste Kommunikationsschnittstelle als ein Schleifschuhübertrager in den Gleitschuh integriert sein.

Es ist möglich, dass beispielsweise aus Redundanzgründen die zweite Führungsbahn 20 eine zweite Signalleitung 46, vorzugsweise Datenbusleitung (zum Beispiel CAN-Bus-Leitung, ISOBUS-Leitung, Profibus-Leitung, Ethernet-Leitung), aufweist. Die Bewegungsvorrichtung 14 kann in diesem Fall mittels der zweiten Kommunikationsschnittstelle 48 mit der zweiten Signalleitung 46 kommunizieren. Die zweite Kommunikationsschnittstelle 48 kann die zweite Signalleitung 46 berühren, wenn die Bewegungsvorrichtung 14 entlang der ersten und zweiten Führungsbahn 18, 20 geführt wird.

Es ist auch möglich, dass das dritte Führungselement 30 eine dritte Kommunikationsschnittstelle 50 und optional beispielsweise aus Redundanzgründen das vierte Führungselement 32 eine vierte Kommunikationsschnittstelle 52 aufweist. Die dritte Kommunikationsschnittstelle 50 kann eine weitere Signalleitung der dritten Führungsbahn 22 (siehe Figur 2) berühren, wenn die Bewegungsvorrichtung 14 entlang der dritten und vierten Führungsbahn 22, 24 geführt wird. Gleichermaßen kann dann auch - sofern vorhanden - eine vierte Kommunikationsschnittstelle 52 eine weitere andere Signalleitung der vierten Führungsbahn 24 (siehe ebenfalls Figur 2) berühren. Damit kann ermöglicht werden, dass eine Kommunikation zwischen der Bewegungsvorrichtung 14 und dem Datenbus auch nach einem Führungsbahnwechsel der Bewegungsvorrichtung 14 von den Führungsbahnen 18, 20 zu den Führungsbahnen 22, 24, oder umgekehrt, möglich ist.

Die zweite Signalleitung 46 und/oder die weiteren Signalleitungen der dritten und vierten Führungsbahn 22, 24 können entsprechend wie die erste Signalleitung 40 ausgeführt sein. Die Kommunikationsschnittstellen 48, 50, 52 können entsprechend wie die erste Kommunikationsschnittstelle 42 ausgeführt sein.

Die Kommunikationsschnittstellen 42, 48, 50 und/oder 52 können in Kommunikationsverbindung mit einer Steuereinheit 54 der Bewegungsvorrichtung 14 sein. Die Steuereinheit 54 kann dazu ausgebildet sein, Sensoren und Aktoren der Bewegungsvorrichtung 14 zu steuern. Die Steuereinheit 54 kann ferner dazu ausgebildet sein, eine Kommunikation mit dem Datenbus (z. B. erste Signalleitung 40, zweite Signalleitung 46 usw.) über die Kommunikationsschnittstellen 42, 48, 50 und/oder 52 zu organisieren. Damit wird ermöglicht, dass, wenn die Bewegungsvorrichtung 14 einen oder mehrere Sensoren (z. B. Positionssensor, Zustandssensor, Gewichtssensor) aufweist, Sensordaten der Sensoren an den Datenbus übertragen werden können. Alternativ oder zusätzlich wird ermöglicht, dass, wenn die Bewegungsvorrichtung 14 einen oder mehrere Aktoren (z. B. Ventil, Greifer-Halterung, Klemm-Halterung, Saughalterung usw.) aufweist, die Aktoren mittels Signalen von dem Datenbus gesteuert werden können.

Ein Beispiel für einen Aktor kann die Halterung 38 sein. Die Halterung 38 kann aktivierbar und deaktivierbar sein. Bei Aktivierung der Halterung 38 kann der Behälter 12 durch die Halterung 38 gehalten werden. Bei Deaktivierung der Halterung 38 kann der Behälter 12 durch die Halterung 38 freigegeben werden. Wenn beispielsweise von einer Kontrolleinheit (nicht dargestellt) erkannt wird, dass ein Mangel am Behälter 12 vorliegt, kann dies zu der Zentralsteuereinheit 44 kommuniziert werden, z. B. über einen Datenbus. Die Zentralsteuereinheit 44 kann beispielsweise über die erste Signalleitung 40 und die erste Kommunikationsschnittstelle 42 mit der Steuereinheit 54 kommunizieren. Die Halterung 38 kann von der Steuereinheit 54 angewiesen werden, den mangelhaften Behälter 12 an der richtigen Position in eine Auffangwanne fallenzulassen.

Ein Beispiel für einen Sensor kann eine Wiegevorrichtung 56 sein, mit der eine Gewichtskraft des an der Halterung 38 gehaltenen Behälters 12 erfasst werden kann. Die Wiegevorrichtung 56 kann hierzu jegliches bekanntes Messprinzip verwenden, z. B. Dehnmessstreifen oder ein Piezoelement. Die Wiegevorrichtung 56 kann beispielsweise als eine sogenannte Wägezelle bzw. ein Kraftaufnehmer ausgeführt sein. Die Wiegevorrichtung 56 kann in die Halterung 38 integriert sein. Die Wiegevorrichtung 56 kann ein Signal ausgeben, das eine durch die Wiegevorrichtung 56 erfasste Gewichtskraft (direkt oder indirekt) angibt.

Die Daten bezüglich des Behältergewichts können beispielsweise mittels der Steuereinheit 54, der ersten Kommunikationsschnittstelle 42 und der ersten Signalleitung 40 zu der Zentralsteuereinheit 44 übertragen werden. Die Zentralsteuereinheit 44 kann überprüfen, ob das Behältergewicht dem gewünschten Gewicht entspricht (z. B. Behälter 12 ausreichend gefüllt?) und entsprechend reagieren, sofern erforderlich.

Weiter kann die Erfindung genutzt werden, um Daten auf der Bewegungsvorrichtung 14 zu speichern, um diese z.B. für eine Produktverfolgung (Track and Trace) zu verwenden. Die Daten können an jeder beliebigen Stelle im Transportsystem 10 ein- bzw. ausgelesen werden. Ebenso können die auf der Bewegungsvorrichtung 14 gespeicherten Daten verwendet werden, um im Transportsystem 10 Aktionen zu aktivieren (z.B. aktivieren einer Druckstation).

Um eine zielgerichtete Kommunikation mit der gewünschten Bewegungsvorrichtung 14 bei mehreren vorhandenen Bewegungsvorrichtungen 14 zu ermöglichen, können die übertragenen Signale mit einer gerätespezifischen Kennung versehen werden. Z. B. kann die Zentralsteuereinheit 44 Anweisungssignale für die Halterung 38 mit einer Kennung für die Bewegungsvorrichtung 14 ergänzen. Die Steuereinheit 54 der entsprechenden Bewegungsvorrichtung 14 prüft, ob die Kennung des empfangenen Signals der eigenen, voreingestellten Kennung entspricht. Ist dies der Fall, wird die Halterung 38 entsprechend dem empfangenen Anweisungssignal von der Steuereinheit 54 betätigt, ansonsten nicht. Aus dem gleichen Grund kann die Steuereinheit 54 Sensordaten von beispielsweise der Wiegevorrichtung 56 mit einer voreingestellten, einzigartigen Kennung ergänzen, sodass für die Zentralsteuereinheit 44 eindeutig identifizierbar ist, welcher Behälter 12 von welcher Bewegungsvorrichtung 14 welches Gewicht aufweist. Durch Verwendung der Kennungen kann somit ein Ursprung und/oder ein Ziel des Signals von den an der Signalleitung 40 angeschlossenen Geräten eindeutig identifiziert werden.

Es ist möglich, dass beispielsweise zur Energieversorgung mindestens eines Sensors, Aktors und/oder Elektromagnets der Bewegungsvorrichtung 14 ferner eine Energieversorgungsleitung 58 in der ersten Führungsbahn 18 umfasst sein kann. Beispielsweise können die erste Energieversorgungsleitung 58 und die erste Signalleitung 40 miteinander integriert sein. In anderen Worten, über die erste Signalleitung 40 kann auch elektrische Energie zu der Bewegungsvorrichtung 14 übertragen werden (z. B. Power over Ethernet, PowerLan, Manchester Bus Powered usw.). Zweckmäßig kann die erste Kommunikationsschnittstelle 42 auch als ein Leistungsabnehmer 60 für die Energieversorgungsleitung 58 funktionieren. Alternativ könnte auch eine Energieversorgungsleitung separat zu der ersten Signalleitung 40 und/oder ein Leistungsabnehmer separat zu der ersten Kommunikationsschnittstelle 42 angeordnet sein. Es ist auch möglich, dass eine oder mehrere weitere Energieversorgungsleitungen in den Führungsbahnen 20, 22 und/oder 24 umfasst sind, z. B. jeweils separat zu oder integriert mit entsprechenden Signalleitungen, sofern vorhanden. Es ist ebenso möglich, dass die Bewegungsvorrichtung 14 einen oder mehrere weitere Leistungsabnehmer aufweist, z. B. jeweils separat zu oder integriert mit der Kommunikationsschnittstelle 48, 50 und/oder 52. Es ist auch möglich, dass die elektrische Energie kabellos übertragen wird, z. B. mittels elektromagnetischer Induktion.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls in den Schutzbereich fallen, so wie er in den Ansprüchen definiert ist.

### Bezugszeichenliste

- 10: Vorrichtung zum Transportieren von Behältern
- 12: Behälter
- 14: Bewegungsvorrichtung
- 16: Behälter-Behandlungsvorrichtung
- 18: Erste Führungsbahn
- 20: Zweite Führungsbahn
- 22: Dritte Führungsbahn
- 24: Vierte Führungsbahn
- 26: Erstes Führungselement
- 28: Zweites Führungselement
- 30: Drittes Führungselement
- 32: Viertes Führungselement
- 34: Erstes Langstatorsegment
- 36: Zweites Langstatorsegment
- 38: Halterung
- 40: Erste Signalleitung
- 42: Erste Kommunikationsschnittstelle
- 44: Zentralsteuereinheit
- 46: Zweite Signalleitung
- 48: Zweite Kommunikationsschnittstelle
- 50: Dritte Kommunikationsschnittstelle
- 52: Vierte Kommunikationsschnittstelle
- 54: Steuereinheit
- 56: Wiegevorrichtung
- 58: Energieversorgungsleitung
- 60: Leistungsabnehmer
- F: Förderrichtung

## Patentansprüche

1. Vorrichtung (10) zum Transportieren von Gegenständen, vorzugsweise von Behältern (12) in einer Behälterbehandlungsanlage, aufweisend:
eine Führungsbahn (18) mit einer Signalleitung (40), vorzugsweise einer Datenbusleitung; und
mindestens eine Bewegungsvorrichtung (14), die entlang der Führungsbahn (18) führbar ist, und die eine Halterung (38), vorzugsweise eine Behälterhals-Halterung oder eine Behältermantel-Halterung, zum Halten eines Gegenstands, vorzugsweise eines Behälters (12), und eine Kommunikationsschnittstelle (42), mittels der die Signalleitung (40) zur Signalübertragung berührbar ist, aufweist,
wobei die mindestens eine Bewegungsvorrichtung (14) ein Führungselement (26) zur Führung der mindestens einen Bewegungsvorrichtung (14) entlang der Führungsbahn (18) aufweist, **dadurch gekennzeichnet, dass**
die Kommunikationsschnittstelle (42) in das Führungselement (26) integriert ist.

2. Vorrichtung (10) nach Anspruch 1, wobei:
die Kommunikationsschnittstelle (42) als ein Schleifringübertrager oder ein Schleifschuhübertrager ausgebildet ist.

3. Vorrichtung (10) nach Anspruch 1 oder Anspruch 2, wobei:
das Führungselement (26) als ein Gleitschuh oder eine drehbare Rolle ausgebildet ist, und vorzugsweise:
das Führungselement (26) und die Kommunikationsschnittstelle (42) gemeinsam als eine drehbare Schleifringübertrager-Rolle ausgebildet sind.

4. Vorrichtung (10) nach einem der vorherigen Ansprüche, ferner aufweisend:
eine weitere Führungsbahn (20; 22) mit einer weiteren Signalleitung (46), vorzugsweise einer Datenbusleitung; und
wobei die mindestens eine Bewegungsvorrichtung (14) ein weiteres Führungselement (28; 30) zur Führung der mindestens einen Bewegungsvorrichtung (14) entlang der weiteren Führungsbahn (20; 22) und eine weitere Kommunikationsschnittstelle (48; 50), mittels der die weitere Signalleitung (40) zur Signalübertragung berührbar ist, aufweist, wobei die weitere Kommunikationsschnittstelle (48; 50) vorzugsweise als ein Schleifringübertrager oder ein Schleifschuhübertrager ausgebildet und/oder in das weitere Führungselement (28; 30) integriert ist.

5. Vorrichtung (10) nach Anspruch 4, wobei:
die Führungsbahn und die weitere Führungsbahn (22), das Führungselement (26) und das weitere Führungselement (30), und/oder die Kommunikationsschnittstelle (42) und die weitere Kommunikationsschnittstelle (50) so relativ zueinander angeordnet sind, dass:
- entweder das Führungselement (26) die mindestens eine Bewegungsvorrichtung (14) entlang der Führungsbahn (18) führt, wobei die Kommunikationsschnittstelle (42) die Signalleitung (40) der Führungsbahn (18) zur Signalübertragung berührt;
- oder das weitere Führungselement (30) die mindestens eine Bewegungsvorrichtung (14) entlang der weiteren Führungsbahn (22) führt, wobei die weitere Kommunikationsschnittstelle (50) die weitere Signalleitung der weiteren Führungsbahn (30) zur Signalübertragung berührt.

6. Vorrichtung (10) nach einem der vorherigen Ansprüche, wobei:
die Kommunikationsschnittstelle (42) zur unidirektionalen Kommunikation ausgeführt ist, vorzugsweise zum Empfangen von Signalen von der Signalleitung (40) oder zum Senden von Signalen zu der Signalleitung (40); oder
die Kommunikationsschnittstelle (42) zur bidirektionalen Kommunikation ausgeführt ist, zum Empfangen von Signalen von der Signalleitung (40) und zum Senden von Signalen zu der Signalleitung (40).

7. Vorrichtung (10) nach einem der vorherigen Ansprüche, wobei:
die Führungsbahn (18) ferner eine Energieversorgungsleitung (58) zur Übertragung von elektrischer Energie aufweist; und
die mindestens eine Bewegungsvorrichtung (14) einen Leistungsabnehmer (60) in, vorzugsweise physischem, Kontakt mit der Energieversorgungsleitung (58) aufweist.

8. Vorrichtung (10) nach Anspruch 7, wobei:
die Energieversorgungsleitung (58) und die Signalleitung (40) miteinander integriert oder separat zueinander angeordnet sind; und/oder
der Leistungsabnehmer (60) und die Kommunikationsschnittstelle (42) miteinander integriert oder separat zueinander angeordnet sind.

9. Vorrichtung (10) nach einem der vorherigen Ansprüche, ferner aufweisend:
ein Langstatorsegment (34) zum Antreiben der mindestens einen Bewegungsvorrichtung (14), wobei vorzugsweise:
ein Antrieb der mindestens einen Bewegungsvorrichtung (14) durch magnetische Wechselwirkungen zwischen mindestens einem Elektromagneten und/oder Permanentmagneten des Langstatorsegments (34), der entlang der Führungsbahn (18) verläuft, und mindestens einem Elektromagneten und/oder Permanentmagneten der mindestens einen Bewegungsvorrichtung (14) bewirkt wird.

10. Vorrichtung (10) nach einem der vorherigen Ansprüche, wobei:
die mindestens eine Bewegungsvorrichtung (14) eine Steuereinheit (54) in Kommunikationsverbindung mit der Kommunikationsschnittstelle (42) aufweist.

11. Vorrichtung (10) nach Anspruch 10, wobei:
die Steuereinheit (54) dazu ausgebildet ist, ein mittels der Kommunikationsschnittstelle (42) von der Signalleitung (40) empfangenes Signal in Abhängigkeit von einem Vergleich einer Kennung des empfangenen Signals mit einer voreingestellten Kennung weiterzuverarbeiten; und/oder
die Steuereinheit (54) dazu ausgebildet ist, ein mittels der Kommunikationsschnittstelle (42) zu der Signalleitung (40) zu sendendes Signal mit einer voreingestellten Kennung, mittels der ein Ursprung des Signals und/oder die mindestens eine Bewegungsvorrichtung (14) eindeutig identifizierbar ist, zu ergänzen.

12. Vorrichtung (10) nach einem der vorherigen Ansprüche, wobei:
die mindestens eine Bewegungsvorrichtung (14) mindestens einen Sensor (56), vorzugsweise eine Wiegeeinrichtung (56), einen Positionssensor und/oder einen Zustandssensor, in Kommunikationsverbindung mit der Kommunikationsschnittstelle (42) zum Senden von Sensorsignalen zu der Signalleitung (40) aufweist,
wobei vorzugsweise:
der mindestens eine Sensor (56) dazu ausgebildet ist, das Sensorsignal mit einer voreingestellten Kennung zu ergänzen, oder die Steuereinheit (54) dazu ausgebildet ist, ein von dem mindestens einen Sensor (56) gesendetes Signal mit einer voreingestellten Kennung zu ergänzen, wobei vorzugsweise der Sensor (56) und/oder die mindestens eine Bewegungsvorrichtung (14) mittels der voreingestellten Kennung eindeutig identifizierbar ist.

13. Vorrichtung (10) nach einem der vorherigen Ansprüche, wobei:
die mindestens eine Bewegungsvorrichtung (14) mindestens einen Aktor (38), vorzugsweise ein Ventil und/oder die Halterung (38), besonders bevorzugt eine Behälter-Klemmvorrichtung, einen Behälter-Greifer und/oder einen Behälter-Haltesauger, in Kommunikationsverbindung mit der Kommunikationsschnittstelle (42) zum Empfangen von Anweisungssignalen von der Signalleitung (40) aufweist.

14. Vorrichtung (10) nach einem der vorherigen Ansprüche, wobei:
mehrere Bewegungsvorrichtungen (14) umfasst sind, deren jeweilige Steuereinheit (54) dazu ausgebildet ist, mit den Steuereinheiten (54) der anderen Bewegungsvorrichtungen (14) mittels der jeweiligen Kommunikationsschnittstelle (42) und der Signalleitung (40) zu kommunizieren; und/oder
die Vorrichtung (10) ferner eine Zentralsteuereinheit (44) aufweist, die mittels der Signalleitung (40) und der Kommunikationsschnittstelle (42) in Kommunikationsverbindung mit der Steuereinheit (54) ist.

15. Vorrichtung zum Behandeln von Behältern (12), aufweisend:
eine Behälter-Behandlungsvorrichtung (16), vorzugsweise:
- eine Herstellvorrichtung zum Herstellen von Behältern (12);
- eine Reinigungsvorrichtung zum Reinigen von Behältern (12);
- ein Prüfvorrichtung zum Prüfen von Behältern (12);
- eine Füllvorrichtung zum Befüllen von Behältern (12);
- eine Verschlussvorrichtung zum Verschließen von Behältern (12);
- eine Etikettiervorrichtung zum Etikettieren von Behältern (12);
- eine Druckvorrichtung zum Bedrucken von Behältern (12); und/oder
- eine Verpackungsvorrichtung zum Verpacken von Behältern (12); und
die Vorrichtung (10) zum Transportieren von Behältern (12) nach einem der vorherigen Ansprüche, wobei die Vorrichtung (10) in die Behälter-Behandlungsvorrichtung (16) integriert ist oder zum Transportieren von Behältern (12) zu und/oder weg von der Behälter-Behandlungsvorrichtung (16) angeordnet ist.

## Claims

1. Device (10) for transporting objects, preferably containers (12) in a container processing system, comprising:
a guide track (18) having a signal line (40), preferably a data bus line; and
at least one movement device (14) which can be guided along the guide track (18), and which comprises a holder (38), preferably a container neck holder or a container casing holder, for holding an object, preferably a container (12), and a communication interface (42) by means of which the signal line (40) can be contacted for signal transmission,
the at least one movement device (14) comprising a guide element (26) for guiding the at least one movement device (14) along the guide track (18),
**characterized in that**
the communication interface (42) is integrated into the guide element (26).

2. Device (10) according to claim 1, wherein:
the communication interface (42) is designed as a slip ring transmitter or a skate transmitter.

3. Device (10) according to either claim 1 or claim 2, wherein:
the guide element (26) is designed as a sliding block or a rotatable roller, and preferably:
the guide element (26) and the communication interface (42) are jointly designed as a rotatable slip ring transmitter roller.

4. Device (10) according to any of the preceding claims, further comprising:
a further guide track (20; 22) having a further signal line (46), preferably a data bus line; and
wherein the at least one movement device (14) comprises a further guide element (28; 30) for guiding the at least one movement device (14) along the further guide track (20; 22), and a further communication interface (48; 50) by means of which the further signal line (40) can be contacted for signal transmission, wherein the further communication interface (48; 50) is preferably designed as a slip ring transmitter or a skate transmitter and/or is integrated into the further guide element (28; 30).

5. Device (10) according to claim 4, wherein:
the guide track and the further guide track (22), the guide element (26) and the further guide element (30), and/or the communication interface (42) and the further communication interface (50) are arranged relative to one another in such a way that:
- either the guide element (26) guides the at least one movement device (14) along the guide track (18), wherein the communication interface (42) contacts the signal line (40) of the guide track (18) for signal transmission,
- or the further guide element (30) guides the at least one movement device (14) along the further guide track (22), wherein the further communication interface (50) contacts the further signal line of the further guide track (30) for signal transmission.

6. Device (10) according to any of the preceding claims, wherein:
the communication interface (42) is designed for unidirectional communication, preferably for receiving signals from the signal line (40) or for transmitting signals to the signal line (40); or
the communication interface (42) is designed for bidirectional communication, for receiving signals from the signal line (40) and for transmitting signals to the signal line (40).

7. The device (10) according to any of the preceding claims, wherein:
the guide track (18) further comprises an energy supply line (58) for transmitting electrical energy; and
the at least one movement device (14) comprises a power consumer (60) in preferably physical contact with the energy supply line (58).

8. Device (10) according to claim 7, wherein:
the energy supply line (58) and the signal line (40) are integrated with one another or arranged separately from one another; and/or
the power consumer (60) and the communication interface (42) are integrated with one another or arranged separately from one another.

9. Device (10) according to any of the preceding claims, further comprising:
a long stator segment (34) for driving the at least one movement device (14), wherein preferably:
a drive of the at least one movement device (14) is brought about by magnetic interactions between at least one electromagnet and/or permanent magnets of the long stator segment (34), which extends along the guide track (18) and at least one electromagnet and/or permanent magnets of the at least one movement device (14).

10. Device (10) according to any of the preceding claims, wherein:
the at least one movement device (14) comprises a control unit (54) in communicative connection with the communication interface (42).

11. Device (10) according to claim 10, wherein:
the control unit (54) is designed to further process a signal received by means of the communication interface (42) from the signal line (40), depending on a comparison of an identifier of the received signal with a preset identifier; and/or
the control unit (54) is designed to supplement a signal to be transmitted to the signal line (40) by means of the communication interface (42) with a preset identifier, by means of which an origin of the signal and/or the at least one movement device (14) can be unambiguously identified.

12. Device (10) according to any of the preceding claims, wherein:
the at least one movement device (14) comprises at least one sensor (56), preferably a weighing apparatus (56), a position sensor and/or a state sensor, in communicative connection with the communication interface (42) for transmitting sensor signals to the signal line (40),
wherein preferably:
the at least one sensor (56) is designed to supplement the sensor signal with a preset identifier, or the control unit (54) is designed to supplement a signal transmitted by the at least one sensor (56) with a preset identifier, wherein preferably the sensor (56) and/or the at least one movement device (14) can be unambiguously identified by means of the preset identifier.

13. Device (10) according to any of the preceding claims, wherein:
the at least one movement device (14) comprises at least one actuator (38), preferably a valve and/or the holder (38), particularly preferably a container clamping device, a container gripper and/or a container holding suction cup, in communicative connection with the communication interface (42) for receiving instruction signals from the signal line (40).

14. Device (10) according to any of the preceding claims, wherein:
a plurality of movement devices (14) are included, the relevant control unit (54) of which is designed to communicate with the control units (54) of the other movement devices (14) by means of the relevant communication interface (42) and the signal line (40); and/or
the device (10) further comprises a central control unit (44) which is in communicative connection with the control unit (54) by means of the signal line (40) and the communication interface (42).

15. Device for processing containers (12), comprising:
a container processing device (16), preferably:
- a production device for producing containers (12);
- a cleaning device for cleaning containers (12);
- a test device for testing containers (12);
- a filling device for filling containers (12);
- a closure device for closing containers (12);
- a labeling device for labeling containers (12);
- a printing device for printing containers (12); and/or
- a packaging device for packaging containers (12); and
the device (10) for transporting containers (12) according to any of the preceding claims, wherein the device (10) is integrated into the container processing device (16) or is arranged for transporting containers (12) to and/or away from the container processing device (16).

## Revendications

1. Dispositif (10) de transport d'objets, de préférence de récipients (12) dans une installation de traitement de récipients, présentant :
une glissière (18) comportant une ligne de signaux (40), de préférence une ligne de bus de données ; et
au moins un dispositif de déplacement (14) qui peut être guidé le long de la glissière (18) et qui présente un support (38), de préférence un support de goulot de récipient ou un support de corps de récipient, destiné à supporter un objet, de préférence un récipient (12), et une interface de communication (42) à l'aide de laquelle la ligne de signaux (40) peut être touchée pour la transmission de signaux,
dans lequel l'au moins un dispositif de déplacement (14) présente un élément de guidage (26) destiné à guider l'au moins un dispositif de déplacement (14) le long de la glissière (18), **caractérisé en ce que**
l'interface de communication (42) est intégrée dans l'élément de guidage (26).

2. Dispositif (10) selon la revendication 1, dans lequel :
l'interface de communication (42) est conçue comme un transmetteur à bague collectrice ou un transmetteur à patin d'usure.

3. Dispositif (10) selon la revendication 1 ou la revendication 2, dans lequel :
l'élément de guidage (26) est conçu comme un patin coulissant ou un rouleau rotatif, et de préférence :
l'élément de guidage (26) et l'interface de communication (42) sont conjointement conçus comme un rouleau de transmetteur à bague collectrice rotatif.

4. Dispositif (10) selon l'une des revendications précédentes, présentant en outre :
une glissière (20 ; 22) supplémentaire comportant une ligne de signaux (46) supplémentaire, de préférence une ligne de bus de données ; et
dans lequel l'au moins un dispositif de déplacement (14) présente un élément de guidage (28 ; 30) supplémentaire destiné à guider l'au moins un dispositif de déplacement (14) le long de la glissière (20 ; 22) supplémentaire, et une interface de communication (48 ; 50) supplémentaire à l'aide de laquelle la ligne de signaux (40) supplémentaire peut être touchée pour la transmission de signaux, dans lequel l'interface de communication (48 ; 50) supplémentaire est conçue de préférence comme un transmetteur à bague collectrice ou un transmetteur à patin d'usure et/ou est intégrée dans l'élément de guidage (28 ; 30) supplémentaire.

5. Dispositif (10) selon la revendication 4, dans lequel :
la glissière et la glissière (22) supplémentaire, l'élément de guidage (26) et l'élément de guidage (30) supplémentaire et/ou l'interface de communication (42) et l'interface de communication (50) supplémentaire sont disposés l'un par rapport à l'autre de sorte que :
- soit l'élément de guidage (26) guide l'au moins un dispositif de déplacement (14) le long de la glissière (18), dans lequel l'interface de communication (42) touche la ligne de signaux (40) de la glissière (18) pour la transmission de signaux ;
- soit l'élément de guidage (30) supplémentaire guide l'au moins un dispositif de déplacement (14) le long de la glissière (22) supplémentaire, dans lequel l'interface de communication (50) supplémentaire touche la ligne de signaux supplémentaire de la glissière (30) supplémentaire pour la transmission de signaux.

6. Dispositif (10) selon l'une des revendications précédentes, dans lequel :
l'interface de communication (42) est adaptée pour la communication unidirectionnelle, de préférence pour la réception de signaux provenant de la ligne de signaux (40) ou pour l'envoi de signaux à la ligne de signaux (40) ; ou
l'interface de communication (42) est adaptée pour la communication bidirectionnelle, pour la réception de signaux provenant de la ligne de signaux (40) et pour l'envoi de signaux à la ligne de signaux (40).

7. Dispositif (10) selon l'une des revendications précédentes, dans lequel :
la glissière (18) présente en outre une ligne d'alimentation en énergie (58) pour la transmission d'énergie électrique ; et
l'au moins un dispositif de déplacement (14) présente un extracteur de puissance (60) en contact, de préférence physique, avec la ligne d'alimentation en énergie (58).

8. Dispositif (10) selon la revendication 7, dans lequel :
la ligne d'alimentation en énergie (58) et la ligne de signaux (40) sont intégrées l'une à l'autre ou disposées séparément l'une de l'autre ; et/ou
l'extracteur de puissance (60) et l'interface de communication (42) sont intégrés l'un à l'autre ou disposés séparément l'un de l'autre.

9. Dispositif (10) selon l'une des revendications précédentes, présentant en outre :
un segment de stator longitudinal (34) pour l'entraînement de l'au moins un dispositif de déplacement (14), dans lequel de préférence :
un entraînement de l'au moins un dispositif de déplacement (14) est provoqué par des interactions magnétiques entre au moins un électroaimant et/ou un aimant permanent du segment de stator longitudinal (34), lequel s'étend le long de la glissière (18), et au moins un électroaimant et/ou un aimant permanent de l'au moins un dispositif de déplacement (14).

10. Dispositif (10) selon l'une des revendications précédentes, dans lequel :
l'au moins un dispositif de déplacement (14) présente une unité de commande (54) en liaison de communication avec l'interface de communication (42).

11. Dispositif (10) selon la revendication 10, dans lequel :
l'unité de commande (54) est conçue pour retraiter un signal reçu de la ligne de signaux (40) à l'aide de l'interface de communication (42) en fonction d'une comparaison d'un identifiant du signal reçu avec un identifiant prédéfini ; et/ou
l'unité de commande (54) est conçue pour compléter un signal à envoyer à la ligne de signaux (40) à l'aide de l'interface de communication (42) par un identifiant prédéfini à l'aide duquel une source du signal et/ou l'au moins un dispositif de déplacement (14) peuvent être clairement identifiés.

12. Dispositif (10) selon l'une des revendications précédentes, dans lequel :
l'au moins un dispositif de déplacement (14) présente au moins un capteur (56), de préférence un moyen de pesée (56), un capteur de position et/ou un capteur d'état, en liaison de communication avec l'interface de communication (42) pour l'envoi de signaux de capteur à la ligne de signaux (40),
dans lequel de préférence :
l'au moins un capteur (56) est conçu pour compléter le signal de capteur par un identifiant prédéfini, ou l'unité de commande (54) est conçue pour compléter un signal envoyé par l'au moins un capteur (56) par un identifiant prédéfini, dans lequel de préférence le capteur (56) et/ou l'au moins un dispositif de déplacement (14) peuvent être clairement identifiés à l'aide de l'identifiant prédéfini.

13. Dispositif (10) selon l'une des revendications précédentes, dans lequel :
l'au moins un dispositif de déplacement (14) présente au moins un actionneur (38), de préférence un distributeur et/ou le support (38), de manière particulièrement préférée un dispositif de serrage de récipient, un moyen de préhension pour récipient et/ou un aspirateur de retenue de récipient, en liaison de communication avec l'interface de communication (42) pour la réception de signaux d'instruction provenant de la ligne de signaux (40).

14. Dispositif (10) selon l'une des revendications précédentes, dans lequel :
plusieurs dispositifs de déplacement (14) sont compris, dispositifs dont l'unité de commande (54) respective est conçue pour communiquer avec les unités de commande (54) des autres dispositifs de déplacement (14) à l'aide de l'interface de communication (42) respective et de la ligne de signaux (40) ; et/ou
le dispositif (10) présente en outre une unité de commande centrale (44) qui est en liaison de communication avec l'unité de commande (54) à l'aide de la ligne de signaux (40) et de l'interface de communication (42).

15. Dispositif de traitement de récipients (12), présentant :
un dispositif de traitement de récipient (16), de préférence :
- un dispositif de fabrication permettant de fabriquer des récipients (12) ;
- un dispositif de nettoyage permettant de nettoyer des récipients (12) ;
- un dispositif d'inspection permettant d'inspecter des récipients (12) ;
- un dispositif de remplissage permettant de remplir des récipients (12) ;
- un dispositif de fermeture permettant de fermer des récipients (12) ;
- un dispositif d'étiquetage permettant d'étiqueter des récipients (12) ;
- un dispositif d'impression permettant d'imprimer des récipients (12) ; et/ou
- un dispositif d'emballage permettant d'emballer des récipients (12) ; et
le dispositif (10) de transport de récipients (12) selon l'une des revendications précédentes, dans lequel le dispositif (10) est intégré dans le dispositif de traitement de récipient (16) ou est disposé pour le transport de récipients (12) vers et/ou loin du dispositif de traitement de récipient (16).
